(19) Europäisches Patentamt
European Patent Office
Office européen des brevets

(11) **EP 2 871 457 B1**

(12) **FASCICULE DE BREVET EUROPEEN**

(45) Date de publication et mention de la délivrance du brevet:
**12.09.2018 Bulletin 2018/37**

(51) Int Cl.:
***G01L 21/10*** *(2006.01)*

(21) Numéro de dépôt: **14191978.7**

(22) Date de dépôt: **06.11.2014**

(54) **Capteur de pression a resonateur electromagnetique**

Drucksensor mit elektromagnetischem Resonator

Pressure sensor with electromagnetic resonator

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2013 FR 1360880**

(43) Date de publication de la demande:
**13.05.2015 Bulletin 2015/20**

(73) Titulaire: **Commissariat à l'Énergie Atomique et aux Énergies Alternatives
75015 Paris (FR)**

(72) Inventeur: **Mercier, Denis
38000 GRENOBLE (FR)**

(74) Mandataire: **GIE Innovation Competence Group
310, avenue Berthelot
69372 Lyon Cedex 08 (FR)**

(56) Documents cités:
**EP-A1- 2 330 396          EP-A2- 0 144 630
EP-A2- 1 944 595          WO-A1-2004/025237
WO-A1-2012/103942**

**Description**

L'invention concerne les capteurs de pression, et en particulier les capteurs de pression pour des niveaux de pression inférieurs à la pression atmosphérique.

Un certain nombre de capteurs de pression sont connus pour mesurer la pression d'un gaz inférieure à la pression atmosphérique.

Le brevet US5633465 décrit un capteur de pression du type Pirani basé sur un conducteur ou semi-conducteur électrique. Le conducteur électrique est plongé dans le gaz dont la pression est mesurée. Le conducteur électrique est chauffé à une température supérieure à la température du gaz dans lequel il est plongé. Le conducteur électrique perd de la chaleur par conduction avec les molécules de gaz dans lequel il est plongé. En fonction de la pression de ce gaz dont la conductivité thermique varie avec la pression, le flux de chaleur échangé entre le conducteur électrique et le gaz est plus ou moins important. Par conséquent, la température du conducteur électrique varie en fonction de la pression du gaz. La résistance électrique du conducteur est modifiée par cette variation de température. Un circuit mesure cette résistance électrique. Ce circuit détermine alors la pression du gaz en fonction de la résistance électrique mesurée.

Un tel capteur repose sur le coefficient de variation de la résistance électrique en fonction de la température des matériaux constituant le conducteur électrique. Ce coefficient étant usuellement inférieur à 1 %, le capteur présente une sensibilité réduite. En outre, la plage de mesure de ce capteur est limitée. En effet, la résistance électrique variant faiblement avec la pression, le bruit de mesure de la résistance a un ordre de grandeur proche de la variation de résistance induite par la variation de pression lorsque les pressions à mesurer sont inférieures à $10^{-2}$ Pa ou supérieures à $10^4$ Pa.

Le document US20110107838 décrit un capteur de pression de type MEMS à résonance mécanique. Ce capteur comporte une poutre vibrante suspendue dans le gaz dont la pression est mesurée. La poutre est actionnée par des électrodes. Une variation de pression du gaz modifie le facteur de qualité mécanique de la poutre. La fréquence de résonance mécanique de la poutre excitée et son amplitude d'oscillation sont alors modifiées. En analysant le mouvement de la poutre, le document déduit sa fréquence de résonance mécanique et en extrapole la pression de gaz.

Un tel capteur présente l'inconvénient de ne fonctionner que sur une plage de fonctionnement assez réduite et n'est pas adapté pour mesurer des niveaux de vide poussés (pressions inférieures à $10^{-1}$ Pa par exemple).

Le document EP0144630 décrit entre autres un dispositif de mesure de pression. Dans un exemple, une cellule à cristaux liquides est excitée par une source lumineuse. On mesure des pics de réflexion du cristal liquide pour déduire une température d'un fluide environnant, la longueur d'onde réfléchie variant avec cette température. La cellule à cristaux liquide forme un réflecteur de Bragg et non un résonateur électromagnétique.

Le document EP1944595 décrit un dispositif de mesure de pression de gaz basé sur un résonateur acoustique. Un tel dispositif présente une précision et une gamme de mesure limitées.

Le document WO2012/103942 décrit un dispositif de mesure de pression de gaz, également basé sur un résonateur acoustique. Un tel dispositif présente donc également une précision et une gamme de mesure limitées.

Ainsi, aucune solution satisfaisante n'a été identifiée pour présenter une sensibilité importante, avec une grande gamme de mesure de pression, avec une structure relativement simple et facilement réalisable.

L'invention vise à résoudre un ou plusieurs de ces inconvénients. L'invention porte ainsi sur un capteur de pression, comprenant:

- un résonateur électromagnétique radiofréquence à guide d'ondes comprenant un matériau diélectrique présentant une permittivité diélectrique variant avec la température ;
- un circuit d'excitation configuré pour propager un champ électromagnétique dans ledit résonateur ;
- un dispositif de chauffage dudit résonateur;
- un dispositif de détection de la fréquence de résonance électromagnétique du résonateur ;
- un dispositif de détermination de la pression de gaz environnant le capteur en fonction de la fréquence de résonance détectée du résonateur.

Selon une variante, ledit matériau diélectrique présente un coefficient de variation de la permittivité diélectrique en fonction de la température au moins égal à 80 ppm/°C.

Selon encore une variante, ledit matériau diélectrique présente une structure cristalline du type pérovskite.

Selon une autre variante, ledit matériau diélectrique comporte une superposition de plusieurs couches de matériaux dont au moins une présente une permittivité diélectrique variant avec la température.

Selon encore une autre variante, le capteur comprend une cavité ménagée pour recevoir un gaz dont la pression doit être mesurée, ledit résonateur électromagnétique radiofréquence étant au moins partiellement logé dans cette cavité.

Selon une variante, le résonateur comporte une face dite avant et une face opposée dite arrière, ladite face avant étant positionnée dans ladite cavité en contact direct avec le gaz dont la pression doit être mesurée et ladite face arrière est disposée en dehors de la cavité

Selon encore une variante, le dispositif de chauffage dudit résonateur est configuré pour chauffer ledit matériau diélectrique à une température comprise entre 80 et 200 °C.

Selon une autre variante, le dispositif de chauffage comporte une résistance de chauffage en contact avec ledit matériau diélectrique.

Selon encore une autre variante, ledit dispositif de détection de la fréquence de résonance électromagnétique du résonateur mesure la fréquence de résonance électrique d'un circuit oscillant incluant ledit résonateur et ledit circuit d'excitation.

Selon une variante, ledit résonateur est un résonateur à guide d'ondes du type diélectrique comprenant :

- un plot en matériau diélectrique ;
- deux électrodes conductrices couplées électromagnétiquement au plot, ledit circuit d'excitation étant connecté auxdites électrodes.

Selon une autre variante,

- ledit résonateur est un résonateur à guide d'ondes du type micro ruban comprenant un micro ruban conducteur, un plan de masse en matériau conducteur;
- le matériau diélectrique présentant une permittivité diélectrique variant avec la température est disposé entre le plan de masse et le micro ruban conducteur ;
- le dispositif de détection et le circuit d'excitation comportent au moins une électrode conductrice couplée électromagnétiquement au micro ruban par l'intermédiaire dudit matériau diélectrique.

Selon une autre variante, ledit résonateur est un résonateur à guide d'ondes du type coplanaire comprenant :

- un micro ruban conducteur ;
- deux lignes de masse sur le même plan que le microruban conducteur ;
- un diélectrique sur lequel sont disposées les deux lignes de masse et le micro ruban conducteur ;

Et le dispositif de détection et le circuit d'excitation comportent au moins une électrode conductrice couplée électromagnétiquement au micro ruban et aux deux lignes de masse.

Selon encore une variante, le capteur comprend deux électrodes conductrices, le dispositif de détection et le circuit d'excitation comportant respectivement une desdites électrodes.

Selon une variante, ledit circuit d'excitation est configuré pour propager un champ électromagnétique à une fréquence au moins égale à 100 MHz dans ledit résonateur.

L'invention porte également sur un procédé de mesure de la pression d'un gaz, comprenant :

- le placement d'un résonateur électromagnétique radiofréquence à guide d'ondes en contact thermique avec le gaz, le résonateur à guide d'ondes incluant un matériau diélectrique présentant une permittivité diélectrique variant avec la température ;
- le chauffage dudit résonateur ;
- l'excitation électromagnétique dudit résonateur ;
- la détection de la fréquence de résonance électromagnétique du résonateur et la détermination de la pression du gaz en fonction de la fréquence de résonance électromagnétique détectée.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un premier exemple de capteur pour la mise en oeuvre de l'invention ;
- les figures 2 et 3 sont respectivement une vue de dessus et une vue en coupe transversale d'un premier mode de réalisation de résonateur pour un capteur selon l'invention ;
- les figures 4 et 5 sont respectivement une vue de dessus et une vue en coupe transversale d'un deuxième mode de réalisation de résonateur pour un capteur selon l'invention ;
- les figures 6 à 10 sont des vues en coupe de différentes variantes de résonateur selon le premier mode de réalisation ;
- les figures 11 et 12 sont des vues en coupe de variantes de résonateur selon le deuxième mode de réalisation ;
- la figure 13 est une vue de dessus de deux résonateurs inclus dans un même capteur selon une variante ;
- la figure 14 est une vue en coupe transversale d'une autre variante de résonateur selon le premier mode de réalisation ;
- la figure 15 est une vue en coupe transversale d'une autre variante de résonateur selon le deuxième mode de réalisation ;
- les figures 16 et 17 sont respectivement une vue de dessus est une vue de côté d'un troisième mode de réalisation de résonateur pour capteur selon l'invention.

L'invention propose de former un capteur de pression à partir d'un résonateur électromagnétique radiofréquence à guide d'ondes incluant un matériau diélectrique présentant une permittivité diélectrique variant avec la température. Le résonateur (et le matériau diélectrique en particulier) est chauffé à une température supérieure à la température du gaz dont la pression est à mesurer.

Ainsi, lorsque la pression varie, la température du matériau diélectrique (chauffé) varie et entraine une variation de la permittivité du diélectrique dans lequel se propagent des ondes électromagnétiques issues d'un circuit d'excitation. La variation de permittivité entraine alors une variation de la vitesse de propagation des ondes électromagnétiques qui résulte en une variation de la fréquence de résonance du résonateur ce qui permet de déterminer la variation de la pression.

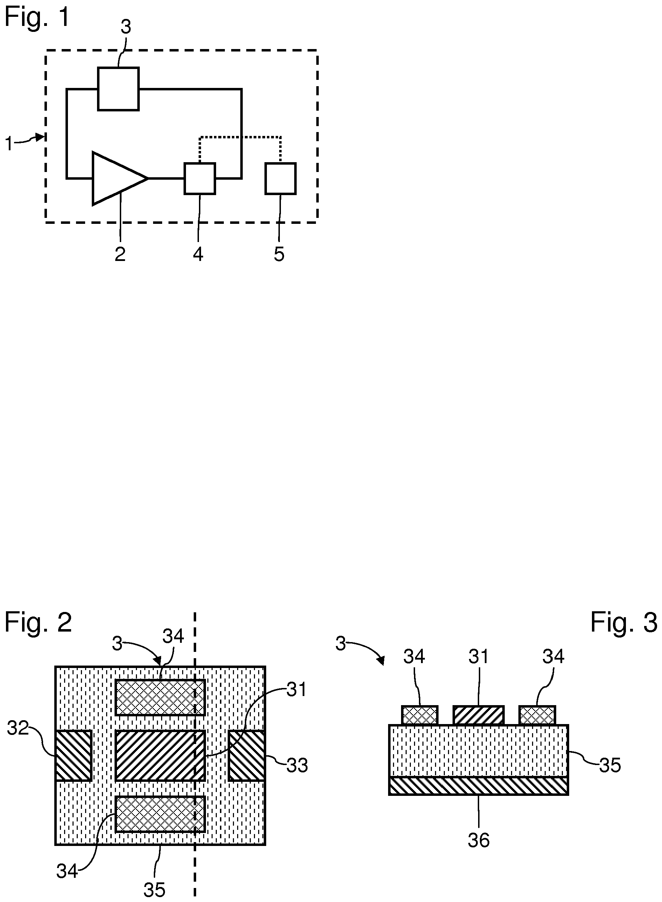

La figure 1 est une représentation schématique d'un premier exemple de capteur de pression 1 pour la mise en oeuvre de l'invention. Le capteur de pression 1 comprend un oscillateur incluant un système actif 2 et un résonateur 3. Le système actif 2 est destiné à exciter le résonateur 3 de façon à obtenir des oscillations à une fréquence définie par le dimensionnement du résonateur 3.

Dans l'exemple de la figure 1, un dispositif 4 mesure la fréquence de résonance électrique de l'oscillateur, par exemple par une mesure de l'onde électromagnétique propagée entre le système actif 2 et le résonateur 3. La valeur de la fréquence de résonance est fournie à un dispositif de détermination de la pression 5. Le dispositif 5 détermine la pression de gaz environnant le capteur 1 en fonction de la fréquence de résonance mesurée par le dispositif 4. Cette pression est notamment calculée à partir de la chaleur échangée entre le résonateur 3 et les gaz dont on mesure la pression, comme détaillé par la suite.

Différentes structures de résonateur 3 vont être détaillées par la suite. Dans ces structures, le résonateur 3 comprend un guide d'ondes incluant du matériau diélectrique présentant une permittivité diélectrique variant avec la température. Le système actif 2 excite ce guide d'onde pour propager un champ électromagnétique radiofréquence dans celui-ci. Un dispositif de chauffage est par ailleurs utilisé pour chauffer le résonateur. En déterminant la quantité de chaleur échangée entre le gaz et le guide d'ondes, on peut déterminer la pression du gaz en contact thermique avec le résonateur.

La figure 2 est une vue de dessus schématique d'une première variante d'un premier mode de réalisation d'un résonateur 3. La figure 3 est une vue en coupe transversale de ce résonateur 3, conçu à partir d'un guide d'ondes du type microruban. Le résonateur 3 comporte ainsi :

- une couche de matériau diélectrique 35;
- une bande conductrice 31 allongée et formée sur une surface supérieure de la couche de matériau diélectrique 35 ;
- des électrodes d'excitation 32 et 33 formées sur la surface supérieure de la couche de matériau diélectrique 35, de part et d'autre de la bande conductrice 31 ;
- un dispositif de chauffage muni de résistances de chauffage 34 formées sur la surface supérieure de la couche de matériau diélectrique 35, de part et d'autre transversalement de la bande conductrice 31 ;
- une couche conductrice 36 est formée sur une surface inférieure de la couche de matériau diélectrique 35. La couche conductrice 36 forme un plan de masse radiofréquence du guide d'ondes microruban. Le guide d'ondes inclut la bande conductrice 31, la couche conductrice 36 et le matériau diélectrique 35.

Les électrodes 32 et 33 sont couplées électromagnétiquement à la bande conductrice 31. Le système actif 2 est connecté aux électrodes 32 et 33 pour inclure le résonateur 3 dans le circuit oscillant. Le système actif 2 génère et propage un champ électromagnétique radiofréquence dans le guide d'ondes microruban. Par l'intermédiaire des résistances de chauffage 34 (par exemple pilotées par un circuit de commande non illustré), le résonateur (incluant la couche de matériau diélectrique 35) est chauffé à une température supérieure à la température du gaz dont on souhaite mesurer la pression. Le résonateur est en contact thermique avec le gaz dont on souhaite mesurer la pression.

Du fait de son coefficient de variation de la permittivité avec la température, la vitesse de propagation des ondes électromagnétiques dans le matériau diélectrique 35 varie en fonction de la température. En chauffant le matériau diélectrique 35 par l'intermédiaire des résistances 34, on peut déterminer la quantité de chaleur transmise par le résonateur au gaz dont on souhaite mesurer la pression. En effet, la température du résonateur varie en fonction de la quantité de chaleur absorbée par le gaz. La quantité de chaleur absorbée par le gaz est dépendante de la conductivité thermique du gaz, cette conductivité thermique étant proportionnelle à la pression du gaz. Cette variation de température modifie alors la valeur de la permittivité diélectrique dans la couche de matériau diélectrique 35, et donc la vitesse de propagation du champ électromagnétique dans cette couche de matériau diélectrique 35. Par conséquent, la fréquence de résonance électromagnétique du résonateur 3 est modifiée par une variation de pression de gaz. En déterminant cette fréquence de résonance électromagnétique, on peut donc déterminer la pression de gaz sur le capteur 1.

Le dispositif de chauffage pourra par exemple appliquer une puissance de chauffage constante sur la couche de matériau diélectrique 35, le dispositif de détermination de la pression de gaz 5 déterminant alors cette pression de gaz à partir de la fréquence de résonance électromagnétique déterminée pour le résonateur 3.

Dans l'exemple des figures 2 et 3, la bande 31 présente une configuration en $\lambda/2$, avec À la longueur d'onde propagée dans le guide d'ondes.

La fréquence de résonance fr du résonateur 3 est alors définie par la relation suivante :

$$fr = c/(\lambda * \sqrt{(\varepsilon r)})$$

Avec c la vitesse de la lumière dans le vide et εr la constante diélectrique du guide d'ondes.

La valeur de la permittivité εr de la couche de matériau diélectrique 35 étant dépendante de la température, la détermination de la fréquence de résonance fr du résonateur 3 permet ainsi d'extrapoler la pression du gaz.

Des simulations ont été réalisées avec un résonateur 3 selon les figures 2 et 3, avec les paramètres suivants : une couche de matériau diélectrique 35 en BST $((Ba_x,Sr_y)TiO_3)$ présentant une épaisseur de 2 μm, une bande conductrice 31 d'une largeur de 10 μm et une longueur d'onde de 1 mm.

A une pression de $10^{-3}$ Pa, la température de la couche de diélectrique 35 est de 140 °C, ce qui aboutit à une permittivité relative de la couche de matériau diélectrique 35 de 250. La fréquence de résonance fr simulée est alors de 20,75 GHz.

À la pression atmosphérique, la température de la couche de diélectrique 35 est de 60° C, ce qui aboutit à une permittivité relative de la couche de matériau diélectrique 35 de 500. La fréquence de résonance simulée est alors de 14,67 GHz.

Le coefficient de variation de la fréquence en fonction de la température TCF vaut alors 5178 ppm/°C.

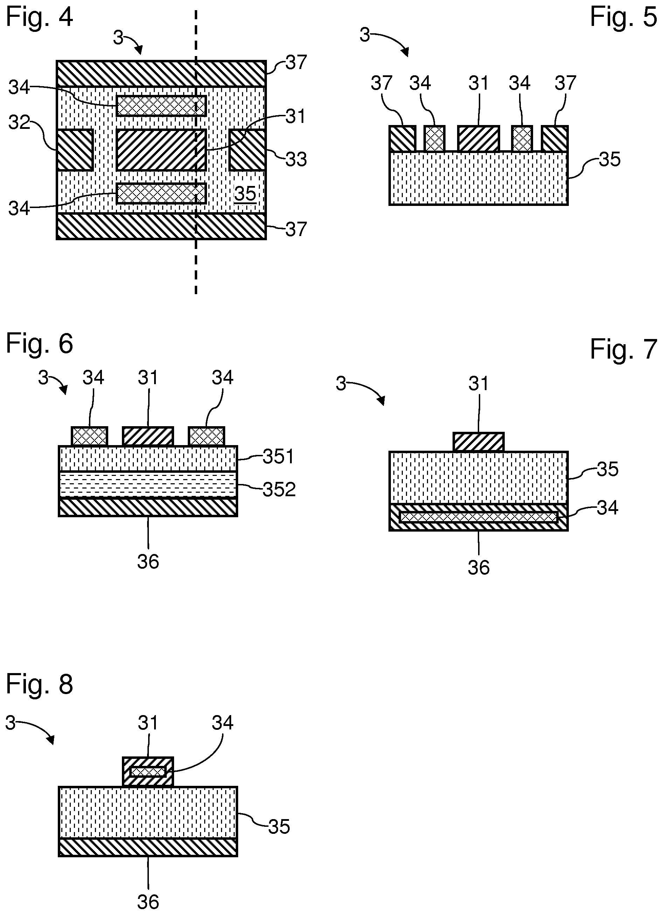

La figure 4 est une vue de dessus schématique d'une première variante d'un deuxième mode de réalisation d'un résonateur 3. La figure 5 est une vue en coupe transversale de ce résonateur 3, conçu à partir d'un guide d'ondes du type coplanaire. Le résonateur 3 comporte ainsi :

- une couche de matériau diélectrique 35;
- une bande conductrice 31 allongée et formée sur une surface supérieure de la couche de matériau diélectrique 35 qui est le conducteur de signal du guide d'onde coplanaire;
- des électrodes d'excitation 32 et 33 formées sur la surface supérieure de la couche de matériau diélectrique 35, de part et d'autre longitudinalement de la bande conductrice 31 ;
- un dispositif de chauffage muni de résistances de chauffage 34 formées sur la surface supérieure de la couche de matériau diélectrique 35, de part et d'autre transversalement de la bande conductrice 31 ;
- des bandes conductrices 37 formées sur la surface supérieure de la couche de matériau diélectrique 35, de part et d'autre transversalement de l'ensemble incluant la bande conductrice 31, les électrodes 32 et 33, et les résistances de chauffage 34. Les lignes conductrices 37 sont les plans de masse radiofréquences du guide d'onde coplanaire.

Les électrodes 32 et 33 sont couplées électromagnétiquement à la bande conductrice 31. Le système actif 2 est connecté aux électrodes 32 et 33 pour inclure le résonateur 3 dans le circuit oscillant. Le système actif 2 génère et propage un champ électromagnétique radiofréquences dans le guide d'onde coplanaire. Par l'intermédiaire de résistances de chauffage 34, le résonateur est chauffé à une température supérieure à la température du gaz dont on souhaite mesurer la pression. Le résonateur est en contact thermique avec le gaz dont on souhaite mesurer la pression.

Le fonctionnement de la mesure de pression est ici sensiblement identique à celui qui a été décrit en référence au mode de réalisation des figures 2 et 3.

La figure 6 est une vue en coupe transversale d'une deuxième variante du premier mode de réalisation du résonateur 3. Dans cette variante, la couche de matériau diélectrique 35 à constante diélectrique variable avec la température est remplacée par la superposition de plusieurs couches diélectriques différentes. En l'occurrence, une couche diélectrique 351 et une couche diélectrique 352 sont superposées. En utilisant des couches 351 et 352 en matériaux diélectriques présentant des coefficients de variation de la permittivité avec la température différents, on peut aisément adapter le coefficient de variation de la permittivité avec la température équivalent du guide d'ondes. En fonction du matériau diélectrique choisi pour le guide d'ondes et du procédé de fabrication d'un tel matériau diélectrique, ce matériau pourra être déposé en plusieurs couches superposées.

La figure 7 est une vue en coupe transversale d'une troisième variante du premier mode de réalisation de résonateur 3. Dans cette variante, les résistances 34 présentes sur la surface supérieure de la couche de matériau diélectrique 35 dans la première variante sont remplacées par une résistance électrique 34 logée à l'intérieur de la couche conductrice 36.

La figure 8 est une vue en coupe transversale d'une quatrième variante du premier mode de réalisation de résonateur 3. Dans cette variante, les résistances 34 présentes sur la surface supérieure de la couche de matériau diélectrique 35 dans la première variante sont remplacées par une résistance électrique 34 logée à l'intérieur de la bande conductrice 31.

Dans les variantes des premier et deuxième modes de réalisation détaillées précédemment, la bande conductrice 31 présente une configuration en λ/2. On peut également envisager des bandes conductrices 31 ayant des configurations en λ / (2*X), avec X un entier par exemple égal à 2.

Dans les variantes des premier et deuxième modes de réalisation détaillées précédemment, la bande conductrice 31 présente une forme rectangulaire ou linéaire.

D'autres configurations de la bande conductrice 31 peuvent être envisagées, notamment en vue de réduire l'encombrement du résonateur 3.

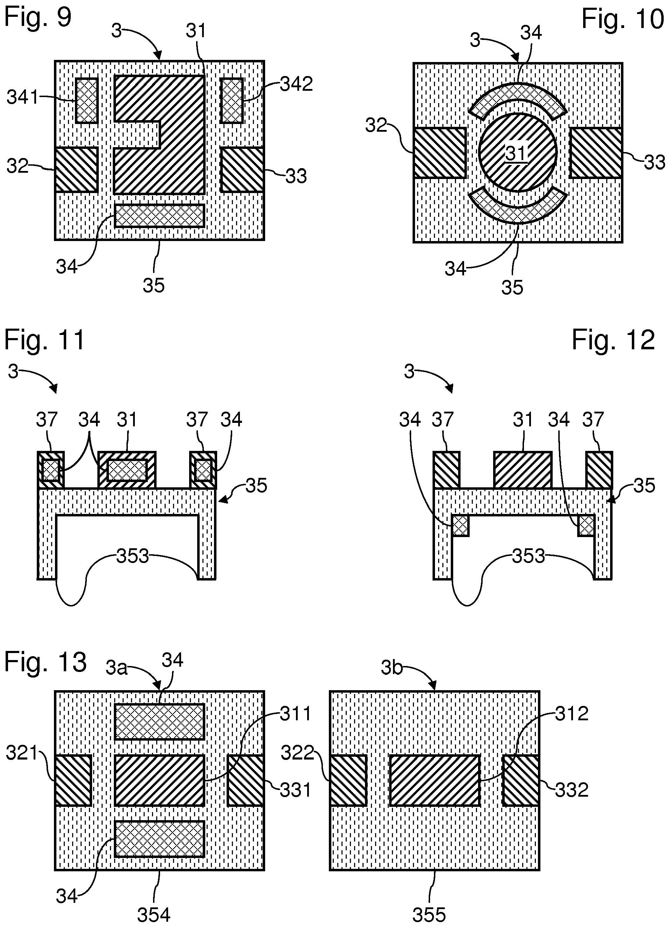

La figure 9 illustre une vue de dessus d'une quatrième variante du premier mode de réalisation de résonateur 3. Dans cette variante, la bande conductrice 31 présente une forme non rectiligne, en l'occurrence une forme en U. Les électrodes 32 et 33 sont disposées de part et d'autre longitudinalement d'une première branche du U. Une résistance de chauffage 34 est positionnée transversalement à côté de cette première branche. D'autres résistances de chauffage 341 et 342 sont disposées sur la couche de matériau diélectrique 35, de part et d'autre longitudinalement de la deuxième branche du U.

La figure 10 illustre une vue de dessus d'une cinquième variante du premier mode de réalisation de résonateur 3. Dans cette variante, l'élément résonnant 31 présente une forme elliptique (en l'occurrence circulaire). Les électrodes 32 et 33 sont disposées de part et d'autre longitudinalement de l'élément résonnant 31. Pour favoriser le chauffage du matériau diélectrique 35 à proximité de l'élément résonnant 31, les résistances de chauffage 34 présentent une forme incurvée suivant le contour de l'élément résonnant 31. Les résistances de chauffage 34 sont positionnées de part et d'autre transversalement de l'élément résonnant 31.

Avantageusement, le dispositif de chauffage peut comprendre une résistance de chauffage en contact avec le cas échéant, le micro-ruban, et/ou les lignes ou plans de masse.

Les figures 11 et 12 illustrent des deuxième et troisième variantes du deuxième mode de réalisation, dans lequel une cavité a été réalisée face arrière, le gaz dont la pression est à mesurer étant au moins présent dans cette cavité. La cavité est délimitée par des parois 353. Avantageusement, la couche de matériau diélectrique 35 présente une épaisseur suffisamment faible pour réduire l'inertie thermique et le temps de réponse thermique du résonateur 3.

Dans la variante de la figure 12, des résistances chauffantes 34 sont positionnées à l'intérieur respectivement des lignes conductrices 37 et de la bande conductrice 31.

Dans la variante de la figure 13, des résistances chauffantes sont positionnées sur la surface inférieure de la couche de matériau diélectrique 35.

La figure 13 illustre deux résonateurs 3a et 3b d'une variante de capteur 1. Dans cette variante 1, le dispositif de détermination de la pression de gaz détermine la pression en fonction d'une mesure différentielle entre les fréquences de résonance respectives des résonateurs 3a et 3b. Une telle mesure différentielle permet de rendre le capteur 1 insensible aux variations de température éventuelles du gaz dont on souhaite mesurer la pression. Pour cela, le dispositif 4 détermine les fréquences de résonance respectives des résonateurs 3a et 3b. Les résonateurs 3a et 3b comportent des couches de matériau diélectrique respectives 354 et 355 dont la permittivité diélectrique varie de façon identique avec la température. Les deux résonateurs 3a et 3b sont en contact thermique avec un même environnement gazeux dont on souhaite mesurer la pression. Le résonateur 3a est chauffé par des résistances chauffantes 34 disposées de part et d'autre transversalement de la bande conductrice 311. Le résonateur 3a est en l'occurrence identique au résonateur de la première variante du premier mode de réalisation. A contrario, le résonateur 3b est dépourvu de dispositif de chauffage.

Les résonateurs 3a et 3b sont excités par un système actif 2, par l'intermédiaire de leurs électrodes 321,331 et 322,332 respectivement. Les électrodes d'excitation 321 et 331 sont formées sur la surface supérieure de la couche de matériau diélectrique 354, de part et d'autre longitudinalement de la bande conductrice 311. Les électrodes 321 et 331 sont couplées électromagnétiquement à la bande conductrice 311. Les électrodes d'excitation 322 et 332 sont formées sur la surface supérieure de la couche de matériau diélectrique 355, de part et d'autre longitudinalement de la bande conductrice 312. Les électrodes 322 et 332 sont couplées électromagnétiquement à la bande conductrice 312.

Avantageusement, un résonateur 3 utilisé dans un capteur 1 selon l'invention présente une enceinte délimitant une chambre destinée à recevoir le gaz dont on souhaite mesurer la pression. Le résonateur 3 est alors disposé dans cette chambre. Une telle chambre permet d'une part de protéger le résonateur 3 des chocs mais également de régler la plage de mesure du capteur 1. Plus le volume de la chambre sera réduit, plus la sensibilité maximale du capteur 1 sera décalée vers des valeurs de pression élevées.

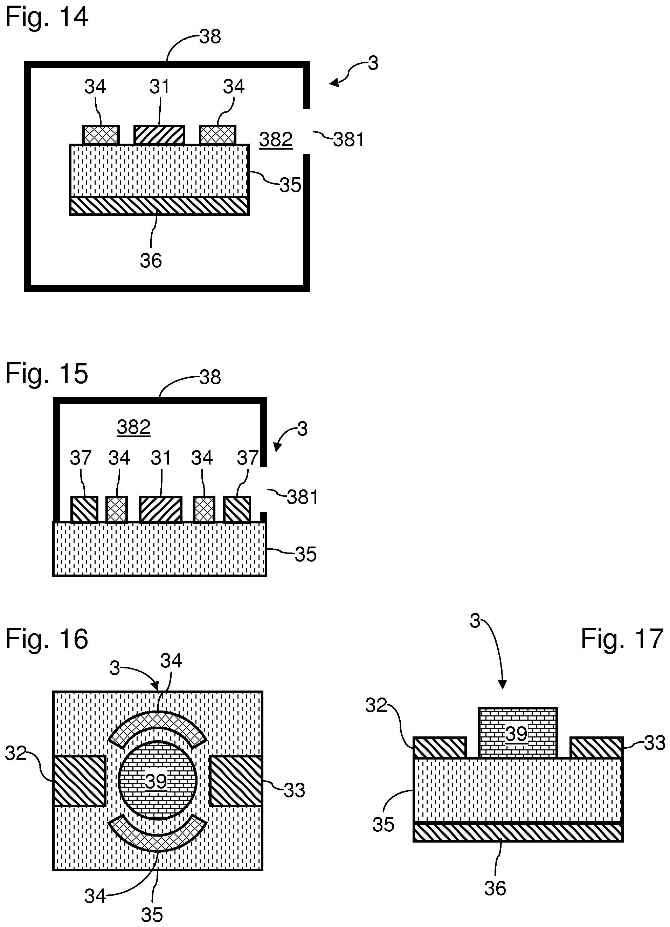

La figure 14 illustre une vue en coupe transversale de l'adaptation d'une enceinte 38 à la première variante du premier mode de réalisation de résonateur 3. L'enceinte 38 délimite une chambre 382 dans laquelle le résonateur 3 est logé. L'enceinte 38 comporte une ouverture 381 permettant l'entrée du gaz dont on souhaite mesurer la pression à l'intérieur de la chambre 382. Le résonateur 3 présente ici un minimum de contact avec l'enceinte 38, afin de ne pas fausser sa température.

La figure 15 illustre une vue en coupe transversale de l'adaptation d'une enceinte 38 à la première variante du deuxième mode de réalisation de résonateur 3. L'enceinte 38 délimite une chambre 382 dans laquelle le résonateur 3 est logé. L'enceinte 38 comporte une ouverture 381 permettant l'entrée du gaz ont on souhaite mesurer la pression à l'intérieur de la chambre 382. La couche de matériau diélectrique 35 forme une paroi de l'enceinte 38. Le reste de l'enceinte est formé par un capot rapporté contre le matériau diélectrique. Le capot peut par exemple être formé d'un substrat usiné ou micro-usiné.

Les figures 16 et 17 sont respectivement des vues de dessus et en coupe transversale d'un troisième mode de réalisation de résonateur 3 pour un capteur 1 selon l'invention. Le résonateur 3 est ici du type résonateur diélectrique. Le résonateur 3 comporte ici un plot 39 en matériau diélectrique, ce plot 39 formant l'élément résonnant du résonateur 3. Le plot 39 est formé sur une couche 35 de matériau diélectrique d'un guide d'ondes. Le plot 39 de matériau diélectrique présente une permittivité diélectrique variant avec la température, comme dans les modes de réalisation décrits auparavant. Deux électrodes conductrices 32 et 33 sont formées sur la surface supérieure de la couche 35 de matériau diélectrique du guide d'ondes, de part et d'autre longitudinalement du plot 39. Les électrodes conductrices 32 et 33 sont couplées électromagnétiquement au plot 39. Des résistances de chauffage 34 sont formées sur la surface supérieure de la couche de matériau diélectrique 35, de part et d'autre transversalement du plot 39. Le plot 39 présente ici une forme cylindrique avec une génératrice s'étendant selon la normale à la couche de matériau diélectrique 35. Le plot 39 présente une section circulaire. Les résistances de chauffage 34 présentent une forme incurvée suivant le contour du plot 39.

Dans les différents modes de réalisation, au moins une couche du guide d'ondes est formée d'un matériau diélectrique présentant une permittivité diélectrique variant avec la température. Par exemple, dans le cadre de l'invention, le coefficient de variation de la permittivité avec la température TCεr présente une valeur égale au moins à 80 ppm/°C en valeur absolue, avantageusement au moins 1000 ppm/°C, et dans certans cas de figure au moins 10000 ppm/°C. Plus la valeur du coefficient de variation de la permittivité du matériau diélectrique avec la température TCεr est élevée, plus le capteur 1 pourra présenter une sensibilité élevée.

Usuellement, l'homme du métier cherche à obtenir des résonateurs dont la permittivité diélectrique est invariante avec la température, afin d'obtenir une stabilité optimale de leur fréquence de résonance. L'invention favorise l'effet inverse, en recherchant une forte variation de la permittivité diélectrique avec la température.

Avec des matériaux connus, on peut notamment envisager de mesurer des pressions inférieures à 1 Pa, et jusqu'à environ $10^{-3}$ Pa par l'intermédiaire d'un capteur 1 selon l'invention. Ainsi, la variation de la fréquence du signal mesuré pour une variation de pression donnée est nettement supérieure à celle qui pouvait être obtenue pour des capteurs de pression de l'état de la technique. Par conséquent, un tel capteur 1 est nettement moins sensible à des bruits de mesure. En particulier, une variation de la fréquence de résonance dans une gamme radiofréquence permet d'obtenir de grandes variations de fréquence de résonance aisément détectable.

Avantageusement, la couche de matériau diélectrique, dont la constante diélectrique varie avec la température, présente une structure cristalline du type pérovskite. Ce matériau pourra être choisi dans le groupe comprenant : PZT, BST, $Pb(Mg_{1/2}W_{1/2})O_3$, $Pb(Ni_{1/3}Nb_{2/3})O3$, $Pb(ZrTi)O_3$.

Le dispositif de chauffage du guide d'ondes détaillé dans les variantes précédentes repose sur une ou plusieurs résistances de chauffage 34, en contact avec la couche de matériau diélectrique ou présentant un pont thermique avec cette couche de matériau diélectrique. De telles résistances de chauffage peuvent être réalisées avec des dimensions réduites, compatibles avec les dimensions du résonateur 3. De telles résistances 34 peuvent aisément être implantées au plus près de l'élément résonnant 31 ou 39. Les résistances 34 pourront présenter toute forme adéquate pour être positionnées au plus près de l'élément résonnant 31 ou 39.

Des résistances 34 peuvent être réalisées dans le même métal qu'un élément résonnant 31 conducteur, par exemple afin de favoriser leur fabrication durant de mêmes étapes de procédés de fabrication. Cependant, on peut également prévoir un dispositif de chauffage rayonnant, par exemple avec une illumination infrarouge ou laser de la couche de matériau diélectrique.

Le dispositif de chauffage peut avantageusement être conçu pour chauffer le guide d'onde à une température comprise entre 80 et 200° C dans le vide. On dispose ainsi d'une température qui est aisément influencée par la pression du gaz, sans que le chauffage n'induise d'écoulements de gaz parasites.

La couche de matériau diélectrique 35 est avantageusement en contact direct avec le gaz dont on souhaite mesurer la pression. Cependant, on peut également envisager de revêtir cette couche de matériau diélectrique 35 de matériaux conducteurs thermiques en contact direct avec le gaz dont on souhaite mesurer la pression, afin d'améliorer l'échange thermique entre ce gaz et le guide d'ondes.

Un tel capteur 1 peut être réalisé à une échelle macroscopique, ou être intégré dans des systèmes micro ou nano électromécaniques. Avantageusement, la fréquence de fonctionnement du résonateur 3 est comprise entre 100 MHz et 100 GHz, afin de disposer d'un très bon compromis entre l'encombrement du résonateur 3, la sensibilité de mesure, et la complexité des circuits électroniques du système actif 2 et du dispositif 4 de détermination de la fréquence de résonance électromagnétique.

Un tel résonateur 3 peut être réalisé avec des étapes technologiques usuelles de la micro-électronique ou de la nanoélectronique, et par exemple être formé sur un substrat compatible avec des techniques de dépôt, gravure et lithographie.

**Revendications**

1.  Capteur de pression (1), **caractérisé en ce qu'**il comprend :

    - un résonateur électromagnétique radiofréquence (3) à guide d'ondes comprenant un matériau diélectrique présentant une permittivité diélectrique variant avec la température ;
    - un circuit d'excitation (2) configuré pour propager un champ électromagnétique dans ledit résonateur ;
    - un dispositif de chauffage dudit résonateur;
    - un dispositif (4) de détection de la fréquence de résonance électromagnétique du résonateur ;
    - un dispositif (5) de détermination de la pression de gaz environnant le capteur en fonction de la fréquence de résonance détectée du résonateur.

2. Capteur de pression (1) selon la revendication 1, dans lequel ledit matériau diélectrique (35) présente un coefficient de variation de la permittivité diélectrique en fonction de la température au moins égal à 80 ppm/°C.

3. Capteur de pression (1) selon la revendication 1 ou 2, dans lequel ledit matériau diélectrique (35) présente une structure cristalline du type pérovskite.

4. Capteur de pression (1) selon l'une quelconque des revendications précédentes, dans lequel ledit matériau diélectrique (35) comporte une superposition de plusieurs couches (351,352) de matériaux dont au moins une présente une permittivité diélectrique variant avec la température.

5. Capteur de pression (1) selon l'une quelconque des revendications précédentes, comprenant une cavité (38) ménagée pour recevoir un gaz dont la pression doit être mesurée, ledit résonateur électromagnétique radiofréquence (3) étant au moins partiellement logé dans cette cavité.

6. Capteur de pression (1) selon la revendication 5, dans lequel le résonateur (35) comporte une face dite avant et une face opposée dite arrière, ladite face avant étant positionnée dans ladite cavité en contact direct avec le gaz dont la pression doit être mesurée et ladite face arrière est disposée en dehors de la cavité.

7. Capteur de pression (1) selon l'une quelconque des revendications précédentes, dans lequel le dispositif de chauffage (34) dudit résonateur est configuré pour chauffer ledit matériau diélectrique à une température comprise entre 80 et 200 °C.

8. Capteur de pression (1) selon l'une quelconque des revendications précédentes, dans lequel le dispositif de chauffage comporte une résistance de chauffage (34) en contact avec ledit matériau diélectrique.

9. Capteur de pression (1) selon l'une quelconque des revendications précédentes, dans lequel ledit dispositif (4) de détection de la fréquence de résonance électromagnétique du résonateur (3) mesure la fréquence de résonance électrique d'un circuit oscillant incluant ledit résonateur et ledit circuit d'excitation.

10. Capteur de pression (1) selon l'une quelconque des revendications précédentes, dans lequel ledit résonateur (3) est un résonateur à guide d'ondes du type diélectrique comprenant :

- un plot en matériau diélectrique (39) ;
- deux électrodes conductrices (32,33) couplées électromagnétiquement au plot (39), ledit circuit d'excitation (2) étant connecté auxdites électrodes (32,33).

11. Capteur de pression (1) selon l'une quelconque des revendications 1 à 10,

- dans lequel ledit résonateur (3) est un résonateur à guide d'ondes du type micro ruban comprenant un micro ruban conducteur (31), un plan de masse en matériau conducteur;
- dans lequel le matériau diélectrique présentant une permittivité diélectrique variant avec la température est disposé entre le plan de masse et le micro ruban conducteur ;
- dans lequel le dispositif (4) de détection et le circuit d'excitation comportent au moins une électrode conductrice (32,33) couplée électromagnétiquement au micro ruban par l'intermédiaire dudit matériau diélectrique.

12. Capteur de pression (1) selon l'une quelconque des revendications 1 à 10, dans lequel ledit résonateur (3) est un résonateur à guide d'ondes du type coplanaire comprenant :

- un micro ruban conducteur (31) ;
- deux lignes de masse (37) sur le même plan que le microruban conducteur ;
- un diélectrique sur lequel sont disposées les deux lignes de masse et le micro ruban conducteur ;
Et dans lequel le dispositif (4) de détection et le circuit d'excitation comportent au moins une électrode conductrice (32,33) couplée électromagnétiquement au micro ruban et aux deux lignes de masse.

13. Capteur de pression (1) selon la revendication 11 ou 12, comportant deux électrodes conductrices, le dispositif de détection et le circuit d'excitation comportant respectivement une desdites électrodes.

14. Capteur de pression selon l'une quelconque des revendications précédentes, dans lequel ledit circuit d'excitation (2) est configuré pour propager un champ électromagnétique à une fréquence au moins égale à 100 MHz dans ledit résonateur.

15. Procédé de mesure de la pression d'un gaz, comprenant :

- le placement d'un résonateur électromagnétique à guide d'ondes incluant un matériau diélectrique (3) en contact thermique avec le gaz, ledit résonateur présentant une permittivité diélectrique variant avec la température ;
- le chauffage dudit résonateur ;
- l'excitation électromagnétique dudit résonateur ;
- la détection de la fréquence de résonance électromagnétique du résonateur et la détermination de la pression du gaz en fonction de la fréquence de résonance électromagnétique détectée.

**Patentansprüche**

1. Drucksensor (1), **dadurch gekennzeichnet, dass** er Folgendes umfasst:

   - einen elektromagnetischen Hochfrequenz-Wellenleiterresonator (3), umfassend ein dielektrisches Material, das eine dielektrische Permittivität aufweist, die mit der Temperatur variiert;
   - eine Erregerschaltung (2), die konfiguriert ist, ein elektromagnetisches Feld in dem Resonator zu verbreiten;
   - eine Heizvorrichtung des Resonators;
   - eine Vorrichtung (4) zur Erkennung der elektromagnetischen Resonanzfrequenz des Resonators;
   - eine Vorrichtung (5) zur Bestimmung des Drucks von Gas, das den Sensor umgibt, in Abhängigkeit von der erkannten Resonanzfrequenz des Resonators.

2. Drucksensor (1) nach Anspruch 1, wobei das dielektrische Material (35) einen Variationskoeffizienten der dielektrischen Permittivität in Abhängigkeit von der Temperatur aufweist, der mindestens 80 ppm/°C beträgt.

3. Drucksensor (1) nach Anspruch 1 oder 2, wobei das dielektrische Material (35) eine kristalline Struktur des Perowskit-Typs aufweist.

4. Drucksensor (1) nach einem der vorhergehenden Ansprüche, wobei das dielektrische Material (35) eine Übereinanderanordnung mehrerer Schichten (351, 352) von Materialien umfasst, wovon mindestens eine eine dielektrische Permittivität aufweist, die mit der Temperatur variiert.

5. Drucksensor (1) nach einem der vorhergehenden Ansprüche, umfassend einen Hohlraum (38), der angeordnet ist, ein Gas aufzunehmen, dessen Druck gemessen werden soll, wobei der elektromagnetische Hochfrequenzresonator (3) zumindest teilweise in diesem Hohlraum untergebracht ist.

6. Drucksensor (1) nach Anspruch 5, wobei der Resonator (35) eine Vorderseite und eine gegenüberliegende Rückseite aufweist, wobei die Vorderseite in dem Hohlraum in direktem Kontakt mit dem Gas positioniert ist, dessen Druck gemessen werden soll, und die Rückseite außerhalb des Hohlraums angeordnet ist.

7. Drucksensor (1) nach einem der vorhergehenden Ansprüche, wobei die Heizvorrichtung (34) des Resonators konfiguriert ist, das dielektrische Material auf eine Temperatur zwischen 80 und 200 °C zu erhitzen.

8. Drucksensor (1) nach einem der vorhergehenden Ansprüche, wobei die Heizvorrichtung einen Heizwiderstand (34) umfasst, der mit dem dielektrischen Material in Kontakt steht.

9. Drucksensor (1) nach einem der vorhergehenden Ansprüche, wobei die Vorrichtung (4) zur Erkennung der elektromagnetischen Resonanzfrequenz des Resonators (3) die elektrische Resonanzfrequenz eines Schwingkreises misst, der den Resonator und die Erregerschaltung enthält.

10. Drucksensor (1) nach einem der vorhergehenden Ansprüche, wobei der Resonator (3) ein Wellenleiterresonator des dielektrischen Typs ist, umfassend:

    - einen Block aus dielektrischem Material (39);
    - zwei leitende Elektroden (32, 33), die elektromagnetisch mit dem Block (39) gekoppelt sind, wobei die Erregerschaltung (2) mit den Elektroden (32, 33) verbunden ist.

11. Drucksensor (1) nach einem der Ansprüche 1 bis 10,

    - wobei der Resonator (3) ein Mikrostreifen-Wellenleiterresonator ist, der einen leitenden Mikrostreifen (31), eine Masseplatte aus leitendem Material umfasst;
    - wobei das dielektrische Material, das eine dielektrische Permittivität aufweist, die mit der Temperatur variiert, zwischen der Masseplatte und dem leitenden Mikrostreifen angeordnet ist;
    - wobei die Vorrichtung (4) zur Erkennung und die Erregerschaltung mindestens eine leitende Elektrode (32, 33) umfassen, die elektromagnetisch über das dielektrische Material mit dem Mikrostreifen gekoppelt ist.

12. Drucksensor (1) nach einem der Ansprüche 1 bis 10, wobei der Resonator (3) ein Wellenleiterresonator des komplanaren Typs ist, umfassend:

    - einen leitenden Mikrostreifen (31);
    - zwei Masseleitungen (37) auf derselben Ebene wie der leitende Mikrostreifen;
    - ein Dielektrikum, auf dem die zwei Masseleitungen und der leitende Mikrostreifen angeordnet sind;

und wobei die Vorrichtung (4) zur Erkennung und die Erregerschaltung mindestens eine leitende Elektrode (32, 33) umfassen, die elektromagnetisch mit dem Mikrostreifen und den zwei Masseleitungen gekoppelt ist.

13. Drucksensor (1) nach einem der Ansprüche 11 oder 12, umfassend zwei leitende Elektroden, wobei die Vorrichtung zur Erkennung und die Erregerschaltung jeweils eine der Elektroden umfassen.

14. Drucksensor nach einem der vorhergehenden Ansprüche, wobei die Erregerschaltung (2) konfiguriert ist, ein elektromagnetisches Feld mit einer Frequenz von mindestens gleich 100 MHz in dem Resonator zu verbreiten.

15. Verfahren zur Messung des Drucks eines Gases, umfassend:

- das Platzieren eines elektromagnetischen Wellenleiterresonators, der ein dielektrisches Material (3) enthält, der in thermischem Kontakt mit dem Gas steht, wobei der Resonator eine dielektrische Permittivität aufweist, die mit der Temperatur variiert;
- das Erhitzen des Resonators;
- das elektromagnetische Erregen des Resonators;
- das Erkennen der elektromagnetischen Resonanzfrequenz des Resonators und das Bestimmen des Drucks des Gases in Abhängigkeit von der erkannten elektromagnetischen Resonanzfrequenz.

**Claims**

1. Pressure sensor (1), **characterized in that** it comprises:

- a radiofrequency electromagnetic resonator (3) with waveguide comprising a dielectric material having a dielectric permittivity that varies with temperature;
- an excitation circuit (2) configured to propagate an electromagnetic field through the said resonator;
- a device for heating the said resonator;
- a device (4) for detecting the electromagnetic resonant frequency of the resonator;
- a device (5) for determining the pressure of gas surrounding the sensor as a function of the detected resonant frequency of the resonator.

2. Pressure sensor (1) according to Claim 1, in which the said dielectric material (35) has a temperature coefficient of permittivity at least equal to 80 ppm/°C.

3. Pressure sensor (1) according to Claim 1 or 2, in which the said dielectric material (35) has a crystalline structure of the perovskite type.

4. Pressure sensor (1) according to any one of the preceding claims, in which the said dielectric material (35) comprises a superposition of several layers (351, 352) of materials of which at least one has a dielectric permittivity that varies with temperature.

5. Pressure sensor (1) according to any one of the preceding claims, comprising a cavity (38) created to receive a gas the pressure of which is to be measured, the said radiofrequency electromagnetic resonator (3) being at least partially housed in this cavity.

6. Pressure sensor (1) according to Claim 5, in which the resonator (35) comprises a face referred to as the front face and an opposite face referred to as the rear face, the said front being positioned in the said cavity in direct contact with the gas the pressure of which is to be measured, and the said rear face is arranged outside the cavity.

7. Pressure sensor (1) according to any one of the preceding claims, in which the device (34) for heating the said resonator is configured to heat the said dielectric material to a temperature of between 80 and 200°C.

8. Pressure sensor (1) according to any one of the preceding claims, in which the heating device comprises a heating resistance (34) in contact with the said dielectric material.

9. Pressure sensor (1) according to any one of the preceding claims, in which the said device (4) for detecting the electromagnetic resonant frequency of the resonator (3) measures the frequency of electrical resonance of an oscillating circuit including the said resonator and the said excitation circuit.

10. Pressure sensor (1) according to any one of the preceding claims, in which the said resonator (3) is a resonator with waveguide of the dielectric type, comprising:

- a block of dielectric material (39);
- two conducting electrodes (32, 33) electromagnetically coupled to the block (39), the said excitation circuit (2) being connected to the said electrodes (32, 33).

11. Pressure sensor (1) according to any one of Claims 1 to 10,

- in which the said resonator (3) is a resonator with waveguide of the micro strip type, comprising a conducting micro strip (31), a ground plane made of conducting material,
- in which the dielectric material that has a dielectric permittivity that varies with temperature is arranged between the ground plane the conducting micro strip;
- in which the detection device (4) and the excitation circuit comprise at least one conducting electrode (32, 33) electromagnetically coupled to the micro strip via the said dielectric material.

12. Pressure sensor (1) according to any one of Claims 1 to 10, in which the said resonator (3) is a resonator with waveguide of the coplanar type, comprising:

- a conducting micro strip (31);
- two ground traces (37) on the same plane as the conducting micro strip;
- a dielectric on which the two ground traces and the conducting micro strip are arranged;

and in which the detection device (4) and the excitation circuit comprise at least one conducting electrode (32, 33) electromagnetically coupled to the micro strip and to the two ground traces.

13. Pressure sensor (1) according to claim 11 or 12, comprising two conducting electrodes, the detection device and the excitation circuit respectively comprising one of the said electrodes.

14. Pressure sensor according to any one of the preceding claims, in which the excitation circuit (2) is configured to propagate an electromagnetic field at a frequency at least equal to 100 MHz through the said resonator.

15. Method for measuring the pressure of a gas, comprising:

- the placing of a electromagnetic resonator with waveguide, said resonator including a dielectric material (3) in thermal contact with the gas, said resonator having a dielectric permittivity that varies with temperature;
- the heating of the said resonator;
- the electromagnetic excitation of the said resonator;
- the detection of the electromagnetic resonant frequency of the resonator and the determining of the pressure of the gas as a function of the detected electromagnetic resonant frequency.

Fig. 1

3

1

2    4    5

Fig. 2

3    34

32

31

33

34

35

Fig. 3

3    34    31    34

35

36

Fig. 4

34
32
34
3
37
31
33
35
37

Fig. 5

3
37   34   31   34   37
35

Fig. 6

3   34   31   34
351
352
36

Fig. 7

3   31
35
34
36

Fig. 8

3   31   34
35
36

Fig. 9

341 — 32 — 34 — 35

3 — 31 — 342 — 33

Fig. 10

3 — 34
32 — 31 — 33
34 — 35

Fig. 11

3
37 34 31 37 34
35
353

Fig. 12

3
34 37 31 34 37
35
353

Fig. 13

3a 34
321 — 311
34 — 331
34
354

3b
322 — 312
332
355

Fig. 14

Fig. 15

Fig. 16

Fig. 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5633465 A
- US 20110107838 A
- EP 0144630 A
- EP 1944595 A
- WO 2012103942 A